# EUROPEAN PATENT SPECIFICATION

(11) **EP 4 576 938 B1**
(45) Date of publication and mention of the grant of the patent: **03.12.2025**
(21) Application number: 24222743.7
(22) Date of filing: 23.12.2024
(51) Int. Cl.: H05B 6/10, C21D 1/10, H05B 6/42, H05B 6/44

(54) **DEVICE FOR THE HEAT TREATMENT OF METAL CONSTRUCTION PARTS, IN PARTICULAR FOR INDUCTION HARDENING**
VORRICHTUNG ZUR WÄRMEBEHANDLUNG METALLISCHER KONSTRUKTIONSTEILE, INSBESONDERE ZUM INDUKTIONSHÄRTEN
DISPOSITIF DE TRAITEMENT THERMIQUE DE PIÈCES DE CONSTRUCTION MÉTALLIQUES, NOTAMMENT POUR LE TREMPAGE PAR INDUCTION

(30) Priority: 22.12.2023 IT 202300027828
(43) Date of publication of application: 25.06.2025
(73) Proprietor: Griso, Paolo, 10040 Givoletto (TO) (IT)
(72) Inventor: Griso, Paolo, 10040 Givoletto (TO) (IT)
(74) Representative: Karaghiosoff, Giorgio Alessandro

(56) References cited:
- WO-A1-93/23909
- JP-A- 2014 224 298
- JP-A- H06 192 725
- KR-B1- 101 327 167

## Description

### Technical Field

The present invention relates to a device for the heat treatment of metal construction parts, in particular for hardening by induction.

In this type of devices, the metal parts are rapidly heated to a high temperature by electromagnetic induction and immediately cooled. Heating by induction is a contactless heating process that uses electromagnetic induction to generate heat within the surface layer of a metal part. By placing the metal in a strong alternating magnetic field, an electric current can be forced to flow through the metal and produce heat. The metal part is generally heated to a temperature at or above the transformation range, and then immediately cooled.

Heating of the part to be treated occurs by means of an electromagnet. Typically, but not exclusively, the electromagnet is shaped to form at least one turn to generate an electromagnetic field and is positioned relative to the part to be processed in such a way that the lines of the generated electromagnetic field permeate the said part to be processed. The electromagnet is powered with alternating current having a pre-established amplitude and a pre-established frequency. In some embodiments, the turn or turns of the electromagnet are shaped in such a way as to form a housing inside them for the part to be processed, which housing has a pre-established shape and pre-established dimensions. Furthermore, the electromagnet has pre-established inductance and resistance characteristics that are tuned with the frequency and intensity of the electromagnetic heating field desired or required to obtain the heating effect on the part.

Although the phase following heating is not directly the object of the present invention, for the sake of completeness, the hardening process requires that after the heating phase, the part is immediately subjected to cooling, which must occur very quickly.

Such cooling can be performed by a variety of different devices, such as, for example, a tank of oil or water in which the part is submerged, or even by positioning the part in a stream of cold air. The said cooling ensures that the surface of the material is hardened and that the heat does not penetrate into the core of the material, preventing phase transformations.

To obtain optimal and correct heating of the part being processed, it is necessary to provide electromagnets, referred to in specific technical jargon also as inductors, whose shape corresponds, within pre-established dimensional ranges, to the shape of the part to be treated. This implies that, in the event of a change in the part to be treated in terms of dimensions and external shape, it is also necessary to replace the electromagnet, that is, the inductor, with an electromagnet specifically adapted to the shape and dimensional characteristics of the new part to be treated.

In fact, the coupling distance between the part to be processed and the inductor, i.e. their conductors, is critical for heating efficiency. Therefore, typically, the size and shape of the electromagnet, or its conductor, must be defined correspondingly to the shape of the part. Although most treatment devices have a stock of basic coils for heating round objects such as shafts, pins, rollers, and so on, some jobs may require a custom coil.

In such a case, it is therefore necessary to halt the machine for the time required to replace at least the inductor. Generally, if the inductance and resistance characteristics of the new inductor do not match, within certain tolerances, those of the previously used inductor, it is also necessary to replace additional elements of the electrical power signal supply circuit to ensure the frequencies and amplitudes of the electromagnetic heating field necessary to efficiently heat the new part being processed.

Considering that typically, the currents passing through the inductor are relatively high, at least the power signal supply conductors to the inductor and also the inductor itself must be cooled during the heating phase of the part.

A widespread variant provides for the cooling of the aforementioned parts, and optionally also of additional parts of the electrical circuit, which is carried out by means of a cooling fluid that is supplied to the aforementioned parts to be cooled through cooling ducts provided inside said parts. In this case, the power signal supply conductors and the conductor forming the turn or turns of the inductor are made tubular and are sealingly connected to each other and to the delivery and return of the cooling fluid supply circuit in a detachable manner.

It follows that the machine downtime required for replacing the inductor is relatively long, both because of the need to re-establish the sealed connection with the cooling fluid circuit and because of the need to calibrate the power signal supply circuit to adapt its resistance, capacitance, and inductance parameters to the new inductor in order to ensure the necessary frequency and amplitude of the oscillating electromagnetic field generated by the inductor to effectively heat the part.

It is redundant to say that such machine downtimes substantially limit the efficiency and productivity of the hardening process.

In a certain number of cases, it is possible to create inductors differently shaped for different parts to be processed, which have parameters such as inductance and resistance that are substantially identical among the various inductors within a pre-established tolerance range. In this case, such tolerances may be of an order of magnitude such that it is not necessary to substantially modify or adapt other parts of the power signal supply circuit, for example, by replacement, to obtain power signals that provide electromagnetic fields with the amplitude and frequency necessary for the heating process.

However, even in these cases, it is still necessary to stop the machine and disconnect the cooling circuit from the used inductor and reconnect it to the new inductor, meaning that even in this case, the machine downtimes can be significant, thus substantially impacting the efficiency of the process.

WO 93/23909 A1 (AUCKLAND UNISERVICES LTD [NZ]; DAIFUKU KK [JP] ET AL.) 25 November 1993 (1993-11-25) describes a primary inductive track or path for a resonant inductive power distribution system which is made up from a number of modules, each supplied as a pre-built and substantially pretuned segment of the track.

### Brief Description of the Invention

The invention aims to create a device for the heat treatment of metal construction parts, in particular for hardening, by induction, of the type comprising:
At least one inductor, preferably constituted by a tubular conductor shaped to extend along a pre-established path, preferably forming at least one turn, and having two terminal connection connectors;
At least one unit for generating and supplying an electrical power signal to power the said inductor, which unit is configured to generate a supply electrical current signal having a pre-established frequency and a pre-established amplitude and to supply the said signal through at least two output conductors to corresponding connectors of the said inductor, said output conductors preferably also being provided with internal channels;
At least one circuit for supplying a cooling fluid, which has a delivery and a return, which are sealingly connectable or connected to the internal channels of said output conductors and to the internal duct of the tubular conductors forming the said inductor;
the said terminal connectors of the at least one inductor being configured to generate an electrical connection with the said output conductors and also to generate a sealed connection of the internal duct of the conductor(s) of the inductor and with the internal channels of the said output conductors.

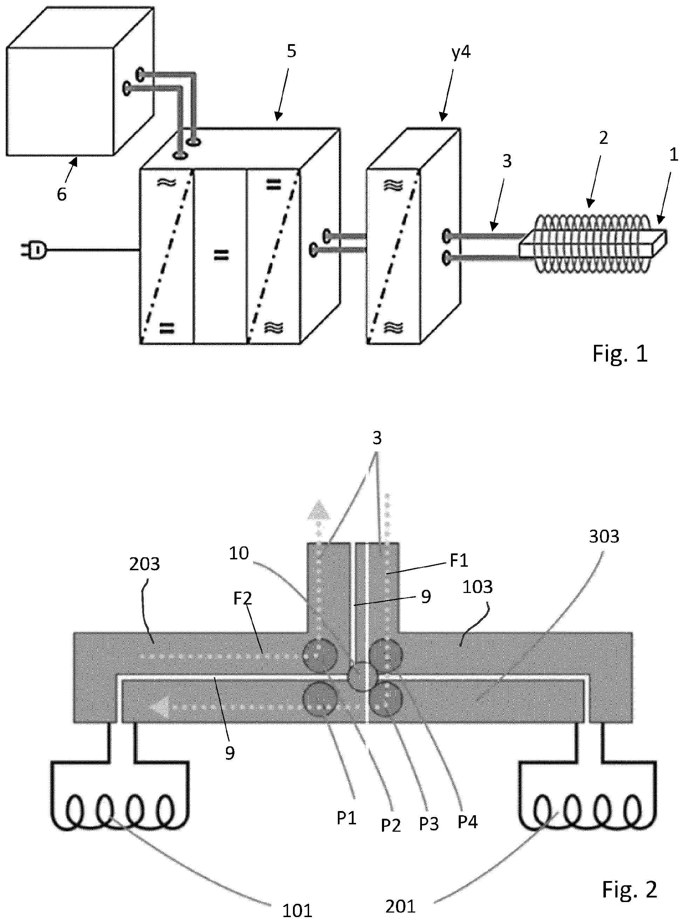

This construction of a device for the heat treatment of metal parts is known in the prior art, and Figure 1 shows a high-level schematic example of a known embodiment.

As shown in Figure 1, a plant or machine for carrying out hardening processes, in particular for performing the heating phase by induction, comprises an inductor 2 that defines a positioning area for the part 1, in which the said part is subjected to a variable magnetic field of pre-established amplitude and frequency.

The power signal, i.e., an alternating current having pre-established maximum and minimum amplitudes and a pre-established frequency, is supplied to the inductor through a so-called heating head 4, which has power supply conductors 3 configured to generate the electrical connection with the inductor 2 and also comprising circulation channels for a cooling fluid, which are connected to cooling channels provided in the inductor 2. This, for example, is made by means of tubular conductors.

The heating head is electrically and mechanically configured to adapt to the electrical parameters that characterize the inductor, such as in particular resistance, inductance, and capacitance, and to adapt to the configuration of the inductor relative, in particular, to the arrangement of the terminals of the tubular conductors thereof to be sealingly connected to the circulation channels of the cooling fluid in the output conductors of the heating head 4. The term heating head refers to a part of the resonant circuit generated by the combination of the inductor with other components, which part of the resonant circuit is generally made as a unit provided on board the machine, i.e., integrated into its structure.

The power signal for supplying the inductor through the heating head 4 is generated by a generator 5, while a cooling fluid supply circuit is provided to which the cooling channels provided in the conductors of the heating head and in the inductor are connected.

Depending on the type of plant, the generator 5 and/or the cooling fluid supply circuit 6 can be provided as separate units on board the machine, which in this case comprises at least one heating head and at least one inductor. Alternatively, in more compact machines intended for small businesses and/or craft enterprises, where the processing is limited to specific parts and the number of required operations is lower, the generator 5 and the cooling fluid supply circuit may be integrated into the same machine structure.

Regarding the solution to the problem of using multiple inductors to perform hardening processes on different parts to be treated, and thus avoiding productivity losses due to machine downtimes for replacing the inductor and/or possibly modifying the heating head or replacing it so that the heating head is compatible with the inductor to be used, there are several possible solutions in the prior art that, however, have significant disadvantages.

According to a possible solution, the machine for performing hardening can provide a plurality of induction heating stations, each equipped with an inductor specifically adapted for treating a specific part and each equipped with a corresponding heating head configured in terms of electrical and structural parameters to operate with a corresponding specific inductor. In this case, typically, the energy required to supply two or more inductors is very high, and therefore correspondingly configured power signal generators, which generally have significant bulk, are required. Similarly, the cooling fluid supply circuit must be configured to serve a plurality of heating heads and the inductors connected to them.

In addition to the bulk of the generator, if multiple heating heads are provided in a machine, significant bulk will also result from each heating station.

These plants therefore have significant dimensions and are characterized by high acquisition and operating costs, making them suitable only for large industrial plants, but entirely unsuitable for use in small businesses and craft enterprises.

Furthermore, it must also be considered that the power signals for generating the magnetic fields useful for heating a part being processed are high-frequency signals, so there are also issued in limitations on the distances between the inductors and the generator and/or the heating heads to which said inductors are connected. Typically, considering the frequency values used in the specific field, the maximum distances are on the order of a few tens of centimeters.

Alternatively, another known solution provides for the use of a centralized generator that alternately manages a plurality of heating head and inductor pairs. The power signal supplied by the generator is alternately fed to one heating head/inductor pair by means of a so-called contactor. These devices are known in the prior art but are not intended for high-frequency applications, as they are subject to rapid degradation due to the thermal stress caused by the high-frequency current that must alternately pass to one or the other of the heating head/inductor pairs provided.

The invention is therefore based on the technical problem of creating a device for the heat treatment of metal construction parts, in particular for hardening, by induction, of the type described above, that allows for the alternative connection of a plurality of different inductors for the induction heating of different construction parts, overcoming the drawbacks described above of the prior art, with relatively simple and reliably functional solutions.

The present invention solves the above-mentioned problem with a device for the heat treatment of metal construction parts, in particular for hardening, by induction, of the type comprising:
At least one inductor, preferably constituted by a tubular conductor that is shaped to extend along a pre-established path, preferably forming at least one turn, which conductor having two terminal connection connectors;
At least one unit for generating and supplying an electrical power signal to power the said inductor, which unit is configured to generate a supply electrical current signal having a pre-established frequency and a pre-established amplitude and to supply the said signal through at least two output conductors to corresponding connectors of the said inductor, said output conductors preferably also being provided with internal channels;
At least one circuit for supplying a cooling fluid, which has a delivery and a return, which are sealingly connectable or connected to the internal channels of said output conductors and to the internal duct of the tubular conductors forming the said inductor;
the said terminal connectors of the said at least one inductor being configured to generate an electrical connection with the said output conductors and also to generate a sealed connection of the internal duct of the conductor(s) of the inductor and with the internal channels of the said output conductors,
and wherein, according to a first and more general embodiment, the output conductors are alternatively connectable to two or more feed branches of a different inductor by means of a switch, said branches further being provided with channels for the circulation of the cooling fluid, which are connected or connectable to the said supply circuit of the cooling fluid, and/or at least part of the said switch being provided with cooling channels connected or connectable to the said supply circuit of the cooling fluid.

In one embodiment, the switch has contact poles, each respectively in electrical contact with the conductors of said branches and/or with the output conductors of the said unit for generating and/or supplying the electrical power signal, and an electrically conductive slider for the alternative contact of said poles between them, which slider is translatable along a displacement guide, from a switching position in which the power signal is supplied to one of the feed branches of a corresponding inductor electrically connected thereto to a switching position in which the power signal is not supplied to said branch and the corresponding inductor and vice versa.

To obtain cooling of the said switch to prevent thermal stress caused by high frequencies from creating degradation conditions in a relatively short time, the means for actuating the displacement of the electrically conductive slider between said two positions are obtained by means of a hydraulic flow, the slider guide being constituted by a duct for an operating fluid and the flow direction of said fluid being variable according to the switching condition in which the slider must be displaced.

In a preferred embodiment, the operating fluid of the electrically conductive slider is constituted by a cooling fluid, and in particular, by the same cooling fluid also supplied to the output conductors and/or the branches and also to the inductors, with supply ducts of the said fluid being provided to the duct constituting the displacement guide of the slider, which in combination with one or more reversal valves allow the fluid to be supplied to the said duct alternatively in two different directions.

A particular embodiment provides that the duct constituting the displacement guide of the slider between the two switching positions is a straight duct, at the ends of which an access opening to the said duct is provided, said openings being alternatively connectable to a delivery and a return of the cooling fluid supply circuit by means of a valve system, which alternatively generates the passage of the fluid in two opposite directions, while the poles are positioned in pairs on diametrically opposite sides of the said duct, the poles of each pair being aligned along the same radial plane with respect to the axis of the said duct and spaced from each other by a distance less than the width of the said duct and the corresponding maximum dimension of the slider, so that the flow of fluid supplied to the duct in one direction brings the slider into contact with the poles of one pair, and the flow of fluid supplied to the duct in the opposite direction moves the slider away from the said pair of poles, with a limit stop provided for moving the slider away.

Advantageously, the duct constituting the guide of the switching slider has a passage section for the operating fluid, i.e., the cooling fluid, which is larger by a pre-established amount than the corresponding section of the slider, the said amount being defined by optimizing the ratio between the thrust force and, therefore, the holding force of the slider in the switching positions and the quantity of fluid flow passing through the duct constituting the displacement guide of the said slider and necessary for cooling the slider, the poles, and the entire switch.

A preferred embodiment provides that the slider is constituted by a sphere, and the duct is cylindrical in shape, while the poles are constituted by cylinders of conductive material, which are electrically connected to one of the branch and/or output conductors and housed in a sealed manner using gaskets in corresponding cylindrical seats, which intersect in pairs and partially for a peripheral band the said duct forming the guide of the slider, the said seats and the said poles of a pair being positioned on diametrically opposite sides of the said duct and radially aligned, i.e., coinciding with each other so that, in a switching condition, the sphere comes into simultaneous contact with the part of the perimeter surface of the poles of the said pair that protrudes inside the diameter of the duct.

A preferred embodiment provides the combination of two inductors, each powered by a branch of the output conductors of the power signal generation and supply unit, in which the two output conductors are made, at least in part, in the shape of an "L" and are positioned with the "L" shape in a reversed mirror position with respect to each other, with two branches parallel to each other and the other two branches longitudinally aligned with each other, the said conductors being separated from each other by an electrical insulator, such as, for example, a mutual spacing gap or an intermediate element of insulating material, while in a position parallel to the said longitudinally aligned branches of the two "L"-shaped output conductors, a branch conductor is placed side by side, with the interposition of a spacing gap or an insulating element, the two inductors being connected or connectable respectively to one of the two "L"-shaped output conductors and to a connection end of the said branch conductor, whereas the switch comprises two pairs of poles intended to be electrically connected to each other by the switching slider and alternatively for each of the said two pairs and the poles of one pair being positioned and electrically connected, respectively, in the corner area of one of the "L"-shaped output conductors and to the branch conductor, while the poles of the other pair are positioned and electrically connected, respectively, in the corner area of the other "L"-shaped output conductor and to the branch conductor, whereas the poles of the two pairs have an identical mutual distance, which is smaller than the corresponding dimension of the guide duct of the switching slider by a pre-established amount and which is smaller than the corresponding size of the switching slider itself.

An embodiment that allows the alternative connection of three or more inductors to the same power signal generation and supply unit provides interposed between the two output conductors a plurality of adjacent branch conductors that are arranged in series with each other between the said two output conductors and that are spaced from each other by an electrical insulation gap or by means of an intermediate electrical insulation insert, with a first inductor connected respectively to a first of the output conductors and to a first branch conductor and with a last inductor connected respectively to a last branch conductor and to the second of the output conductors and with the branch conductors provided between the said first and the said last branch conductor connected in series with each other by a corresponding inductor, while between the said first output conductor and the said first branch conductor, as well as between the said last branch conductor and the said second output conductor and between each pair of adjacent branch conductors connected to each other by an inductor, a switching slider is provided for switching the said conductors in parallel to the corresponding inductor, with the said switch constituted by a pair of poles respectively electrically connected to the corresponding output conductor and to the corresponding branch conductor and between the two branch conductors to which an inductor is connected, which poles can be connected or disconnected by means of a switching slider that is movable between a position of simultaneous contact of the corresponding two poles and a position of separation from the said two poles.

In one embodiment, the said switch comprises a guide duct that passes between the said two poles and is intersected along part of its dimension parallel to the distance between them by the said two poles, the distance between the said poles being smaller than the corresponding dimension of the switching slider, and a limit stop being provided in the switching position of the switching slider where the said slider is moved away from the said two poles, the displacement of the switching slider being actuated by a flow of fluid, in particular a flow of cooling fluid, with the direction of said flow being reversible.

Advantageously, the poles can have a cylindrical construction, the guide duct can be cylindrical, and the slider can be spherical, therefore, the switch has a construction like the one described above regarding the preferred embodiment that allows the alternative use of only two inductors and provides for the presence of two pairs of poles alternatively connectable to each other instead of only two poles that can be electrically connected or disconnected from each other.

For the implementation of any of the described embodiments, avoiding the need to modify or replace the power signal generation and/or supply unit or the unit for tuning the electrical characteristics of the inductor to the variable current necessary for powering the inductor, known as the heating head, it is necessary for the various inductors provided to have electrical characteristics substantially identical to each other within a pre-established range, particularly regarding the values of the parameters related to resistance, inductance, and/or capacitance of the inductors.

However, it is clear to the skilled person what possible constructive measures are necessary to vary the values of said parameters of an inductor without compromising its functionality, measures that may consist of additional sections of the inductor conductor compared to the portion functionally necessary for the energy transfer by induction to the part being processed.

### Brief Description of the Figures

Figure 1: High-level schematic of a generic device from the prior art.
Figure 2: Schematic view of the switch for the alternative connection of two inductors to the output conductors of a common power signal supply unit.
Figure 3: Schematic view of a combination of feed branches for three or more inductors and related switches for their alternative connection to the output conductors of a common power signal supply unit.
Figure 4: Perspective view of a constructive embodiment according to the scheme of Figure 2.
Figure 5: Sectional view in a plane parallel to the longitudinal axes of the conductors and central with respect to their thickness.
Figure 6: Sectional view of the embodiment shown in Figures 3 to 5 along a plane perpendicular to Figure 5 and parallel to the displacement direction of the switching slider, also passing through the central diameter of the first pair of poles.
Figure 7: Sectional view along a plane parallel to Figure 6 but passing through the center of the switching slider guide duct.
Figure 8: Enlarged elevation view of the section according to Figure 6.
Figure 9: Enlarged sectional view of the switch according to the previous figures along a plane parallel to the axis of the switching slider guide duct, with the poles omitted.
Figure 10: Perspective view of the switch according to the previous figures, with the block containing the pole seats and the switching slider guide duct omitted.

### Detailed Description of the Figures

Referring to the figures, these illustrate a device for the heat treatment of metal construction parts, in particular for hardening by induction, according to the present invention. The features of Figure 1 are to be considered common to the present invention, except for the fact that the two output conductors 3 are specifically configured to allow the simultaneous connection and alternative activation of two or more different inductors 2.

Figure 2 schematically shows a configuration of the device according to the present invention, which provides for the two output conductors 103 and 203 through which the power signal generation and/or supply unit or the heating head 4, according to Figure 1, supplies two different inductors 101 and 201 with the power signal for generating the variable magnetic field by which, through magnetic induction, a part or workpiece is heated and made to be permeated by the said magnetic field.

Specifically, the two conductors 103 and 203 are the output conductors from a so-called heating head, which includes the electrical components forming the resonant circuit to which an inductor is connected and which, in turn, receives a power signal with pre-established characteristics from a unit for generating and/or supplying the said power signal.

Such a heating head can be an operational unit separate from the said unit for generating and/or supplying the power signal or integrated into the same.

The electrical characteristics of the inductors affect the values of inductance, resistance, and capacitance of the resonant circuit, therefore replacing the inductor may require replacing the heating head as well. However, it is also possible to configure different inductors so that they have substantially identical electrical characteristics within pre-established tolerances, thus avoiding the need to replace or tune the heating head specifically for each different inductor.

The present invention is directed to inductors that differ from each other but exhibit characteristics of resistance, inductance, and/or capacitance that are substantially identical within pre-established tolerance ranges, so they can be used without modifying the heating heads or other components of the oscillating circuit.

The two output conductors 103 and 203 are provided in combination with a branch conductor 303, and the two inductors are connected with their respective supply terminals to one of the two output conductors 103, 203 and the branch conductor, respectively.

The power signal is switched from one inductor to the other by means of a switch. The said switch has contact poles, respectively, with one of the output conductors 103, 203 and with the branch conductor 303, with a corresponding pole in electrical contact with said output conductor provided for each output conductor 103, 203 and with each of the said poles associated with a pole electrically connected to the branch conductor 303. Therefore, the switch features two pairs of poles, indicated as P1, P2 and P3, P4. Of these, the poles P2 and P4 are electrically connected respectively to one of the output conductors 103, 203, while the poles P1 and P3 are connected to the branch conductor. A connection slider 10, made of electrically conductive material, is guided so as to alternately move towards the poles P1 and P2, generating an electrical contact between them when it is in an end-of-stroke position against them, and alternately towards the poles P3 and P4, generating an electrical contact between them when it is in an end-of-stroke position against them, while the poles P1 and P2 remain electrically isolated from each other.

As will be described in detail later with reference to a specific non-limiting constructive embodiment, to prevent heating of the switch, i.e., the poles and the switching slider, as well as other possible structural parts thereof, the displacement of the switching slider is controlled by a fluid flow fed to a guide duct of the said switching slider by means of a circuit for reversing the direction of flow, so that the said fluid flow moves the slider towards the pair of poles P1 and P2 or P3 and P4, depending on the direction of the flow fed to the guide duct.

In one embodiment, the fluid can be the same cooling fluid that is fed to the output conductors and/or the branch conductors and also to the inductors.

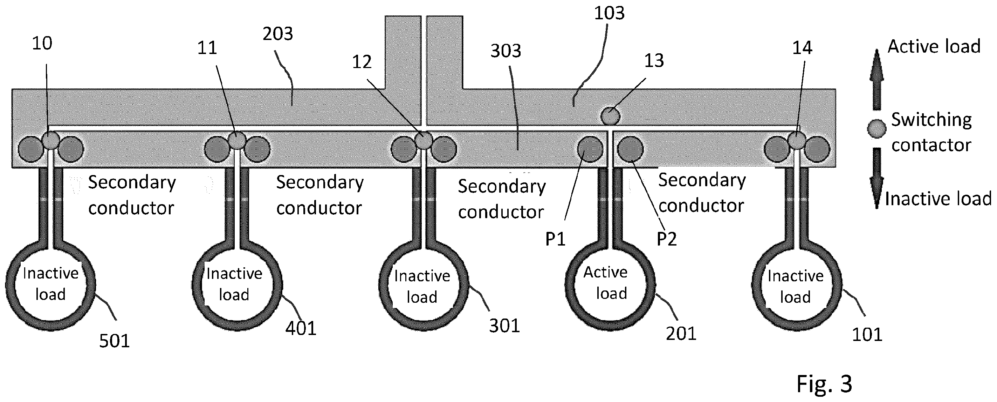

As shown in Figure 3, switching causes the power signal to be diverted to the branch with the lower resistance.

In Figure 2, the switching slider connects the output conductor 103 to the branch conductor 303, thereby isolating the second inductor 203 from the power signal, as shown by the arrows F1 and F2, which indicate the flow of the supply current to the inductor 101. Activating the switching, i.e., moving the switching slider 10 from the position connecting the poles P3 and P4 to the position connecting the poles P1 and P2, the situation is reverted, and the power signal is fed to the inductor 201, isolating the inductor 101 from it.

Advantageously, to achieve a relatively simple and compact configuration of the switch 100, it is advantageous to design the output conductors so that they have a substantially identical and mutually mirrored "L" shape. Specifically, the output conductors 103 and 203 are positioned with one branch of the "L" shape parallel to each other. The other branch of the "L" shape of the two output conductors 103, 203 is oriented in opposite directions to each other, with the said two branches coinciding in the direction of their longitudinal axis and forming two adjacent corner zones. Parallel to the longitudinally coincident branches of the output conductors 103, 203 and on the opposite side with respect to their parallel branches, a branch conductor is provided. The two inductors 101 and 201 are connected respectively to one end of the branch conductor and one of the output branches.

The output conductors 103, 203 and the branch conductor 303 are electrically isolated from each other, with the possibility of simply spacing said conductors apart to a certain extent, thus forming air gaps, or with the insertion of insulating elements between said conductors.

In the corner zones of the "L"-shaped output conductors, a pole is provided on each output conductor 103, 203, respectively, indicated as P2 and P4. Moreover, in a position coinciding with each pole P2 and P4, along a direction parallel to the longitudinal axis of the two parallel branches of the output conductors 103, 203, a pole is provided, respectively indicated as P1 and P3.

The poles P1 and P2 and the poles P3 and P4 form two pairs of switching poles positioned at the ends of a pre-established displacement path of the switching slider 10.

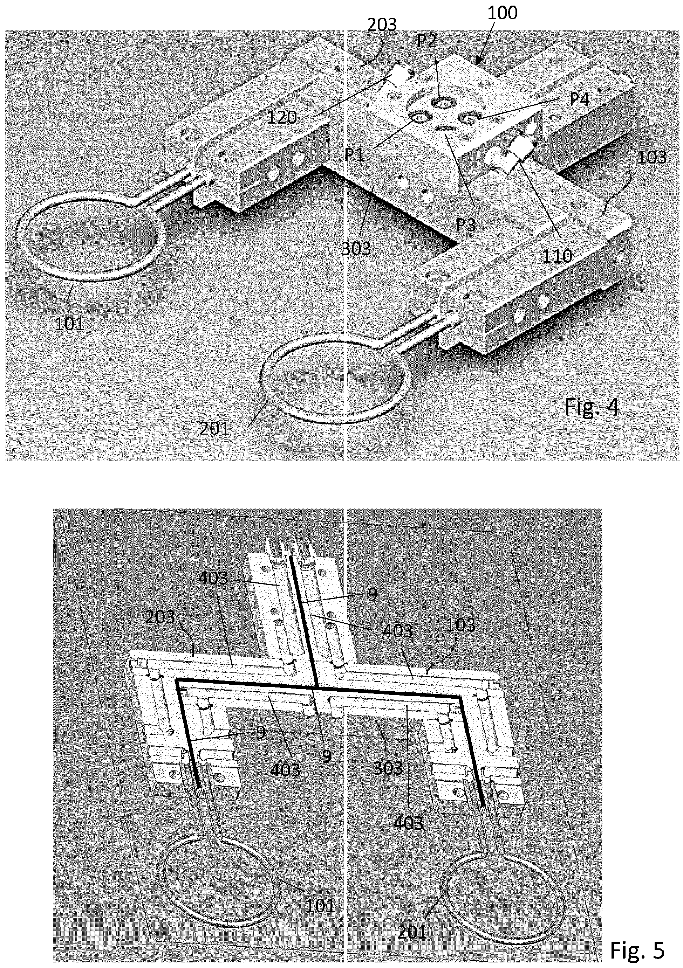

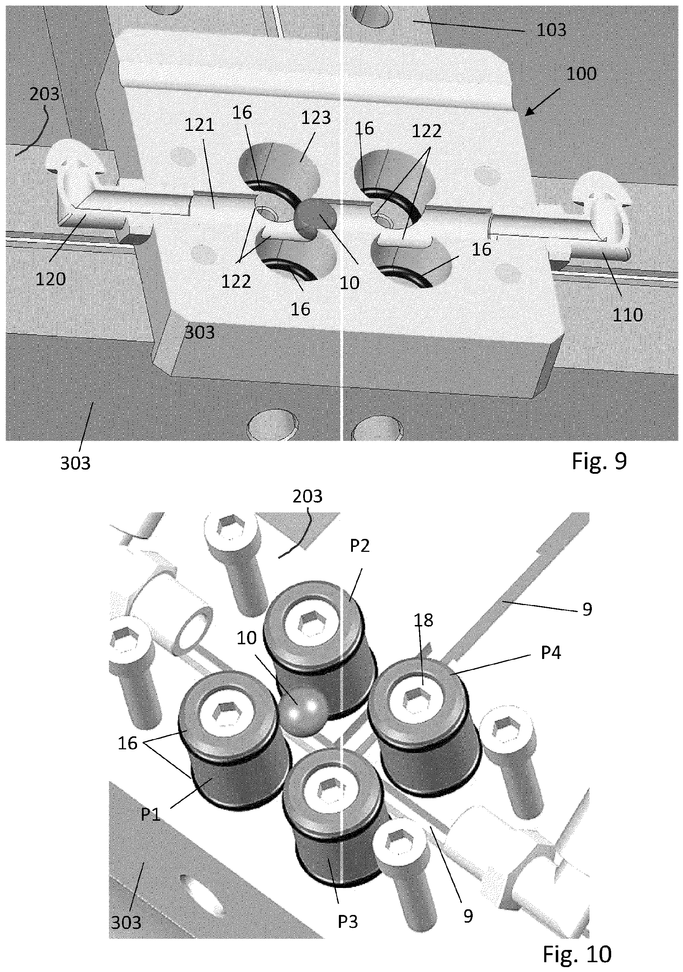

Figures 4 to 10 show various views of a specific advantageous embodiment of the said switch, which is indicated as 100 in the said figures.

As shown in Figures 4 and 5, the shape of the output conductors 103 and 203 and the branch conductor 303 is substantially identical to that of Figure 2, except that the branch conductor is in a "C" shape, with two transverse terminal branches extending parallel to a transverse terminal branch of the respective output conductor 103, 203, to which the corresponding inductor 101, 201 is electrically connected, illustrated schematically as a single annular turn. The configuration of the poles P1 to P4 and the switch 100 is substantially identical to the schematic configuration of Figure 2.

As clearly visible in Figure 5, which shows a section along a plane subtended by the longitudinal median axes of the output conductors 103, 203, the said output conductors, as well as the branch conductor 303, feature channels for the passage of a cooling fluid, indicated as 403. Said channels are associated with outlet openings on the perimeter surfaces of the conductors 103, 203, 303 to allow the attachment of valves or other circulation ducts for the said cooling fluid. The cooling fluid also passes through the inductors, which are advantageously made using tubular conductors, as shown in Figure 5.

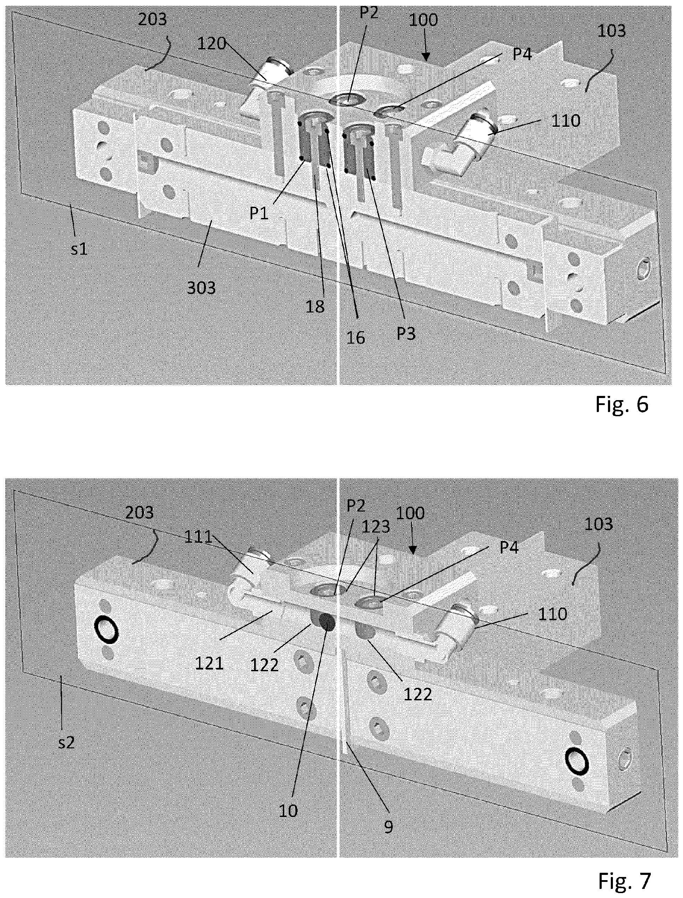

Figures 6 and 7 show two sectional views along two planes parallel to each other, indicated as S1 and S2, and oriented parallel to the longitudinal axis of the central branch of the branch conductor 303 as well as perpendicular to the sectional plane of Figure 5.

The sectional plane S1 cuts diametrically through the poles P1 and P3 and shows the housing casing of the same, which includes cylindrical chambers 123 oriented perpendicularly to the direction of displacement of the switching slider and in which the poles P1 to P4 are sealingly housed by means of end gaskets such as O-rings 16 or similar.

The poles P1 to P4 are mechanically fixed and arranged to generate electrically conductive contact with the branch conductor 303 and the respective output conductors 103, 203 by means of bolts 18, which are threaded into coaxial threaded seats provided in the body of said output conductors 103, 203 and the branch conductor 303.

The section of Figure 7 is taken along a plane parallel to the axes of the cylindrical poles P2 and P4 and contains the central longitudinal axis of a guide duct 120 for the switching slider 10, which is implemented in the shape of a sphere. The guide duct 120 for the movement of the switching slider 10 opens at the opposite transverse walls of the casing of the switch 100, where it extends externally with connection fittings to the circuit for supplying the cooling and actuation fluid for the switching slider 10.

Specifically, the said fittings, indicated as 110 and 120, are connected to a valve and ducts system that allows for reversing the flow direction through the guide duct 121 of the switching slider 10.

Such a circuit is not illustrated, being obvious to a person skilled in the art and forming part of the basic technical knowledge of the field expert.

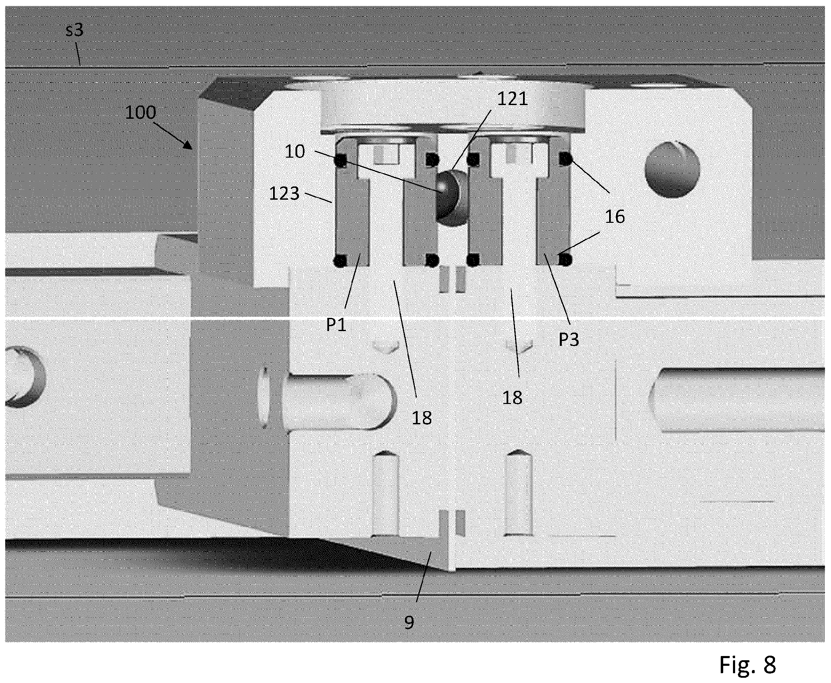

As clearly visible in Figures 8 to 10, the guide duct 121 of the switching slider 10, which in this embodiment is spherical, extends in an intermediate position between the poles P1 and P2 and P3 and P4 of the said two pairs of poles and has a diameter such that it intersects the cylindrical chambers 123 housing the said poles, making the perimeter surfaces of the poles accessible for contact with the switching slider 10 at the windows 122 formed by the said intersection.

Additionally, the diameter of the switching slider is greater than the distance between the two poles P1, P2 and P3, P4 of each pair. Advantageously, the diameter of the sphere is slightly smaller than the diameter of the guide duct 120, allowing the fluid flow supplied to the said guide duct 121 to have an impact section sufficient to move the slider in the direction of the corresponding pair of poles and to hold the slider in this contact position, while simultaneously permitting the passage of a sufficient quantity of cooling fluid to effectively cool the switch 100 and its structural parts.

The operation of the device according to the present invention is as follows:
With a control valve configured to reverse the flow direction, in one position, the cooling fluid enters the first output conductor 103 and flows to its outlet towards a first control valve. The valve controls the downstream flow direction but never stops it. The cooling fluid flow enters the guide channel of the switching slider and pushes the said switching slider towards one pair of electrical poles, P1, P2 or P3, P4.

The slider 10 is maintained in position by the pressure of the cooling fluid flowing around it and closes the electrical circuit between the two electrical poles it contacts. The poles and the slider create a local short circuit, excluding the passage of current in the inductor parallel to the poles. The cooling fluid flow cools the poles and the slider 10. Switching the control valve to another position reverses the cooling fluid flow direction, moving the slider towards the other two electrical poles, thereby locally short-circuiting and excluding the other inductor while reactivating the previous one.

An additional advantage of using the cooling fluid for switching control lies in the fact that, since relatively high currents are involved, there is a possibility of arc formation between the switching slider and the poles, and the cooling fluid flow extinguishes the electrical arc upon contact opening, preserving both the poles and the slider itself.

According to a refinement of the present invention and as shown in Figure 4, the combination of multiple hydraulically actuated switches allows for the expansion of the number of inductors at will, simply by providing a corresponding number of branch conductors associated with a respective inductor and a switch.

Figure 4 shows a schematic example of a possible configuration that allows simultaneously connecting a plurality of inductors to the output conductors 103 and 203, which inductors can be activated one at a time alternately by operating the switches accordingly.

The configuration includes two output conductors 103, 203 and a series of branch conductors 303, to one of which 103 a first inductor 101 is connected, which is connected to a first of the two output conductors 103. The second output conductor 203 is connected to a last inductor 501 and to a last branch conductor 303, while between the said first and the said last branch conductor, two additional branch conductors 303 are provided, which are connected in series to each other and respectively to the said first and the said last branch conductor 303 by means of a corresponding inductor as indicated with 201, 302, and 401. In parallel to each inductor, i.e., at their terminals, switch poles are provided, which are in electrical contact respectively with the first output conductor 103 and the first branch conductor 303 and between each pair of adjacent branch conductors 303 up to the last branch conductor 303 and the second output conductor 203. In combination with the said pairs of poles, a switching slider is provided, which is translatable from a position of electrical contact with the poles of the corresponding pair, wherein the two terminals of the corresponding inductor are short-circuited, to a position of separation where the switching slider is at a certain distance and not in contact with the said poles, thereby not generating an electrically conductive contact between them.

The switch, although having only two poles, can advantageously be hydraulically actuated and may have a construction analogous to that described with reference to the embodiment featuring only two inductors, with the second pair of poles provided in the said embodiment with two inductors being omitted and replaced by a stop that serves solely as an end-of-travel limit for the switching slider 10 in the direction of separation from the corresponding pair of poles.

As shown in the figure, to activate a predetermined inductor, i.e., to enable its supply with the power signal, it is sufficient to keep all the switching sliders in the condition of electrical connection between the corresponding pair of poles, moving the switching slider to the position where the poles are electrically separated for the inductor to be activated.

In Figure 3, the sliders 10, 11, 12, and 14 are in contact with the corresponding pair of poles, while slider 13 is in a position where it is not in contact with them, thus allowing the power signal to supply the corresponding inductor 201, while the others remain inactive.

The inductor 201 is deactivated and another is activated by correspondingly changing the switching condition of the switches.

It is evident that, in principle, any number of inductors alternately activatable among themselves can be provided. However, as already highlighted at the beginning, since the power signal is at high frequency, the possible path from its source is limited.

The advantages of the present invention are clearly apparent from the above and mainly consist in the possibility of prearranging multiple inductors in a machine in advance of production. This results in increased machine flexibility and production and increased productivity.

The switch is internal to the resonant circuit, so it does not require replacing the heating heads, and it is possible to use the same heating head for all the inductors. This implies a reduction in structural complexity and bulk.
By using the cooling fluid flow, the switching is independent of the operating electrical frequency.

## Claims

1. Device for the heat treatment of metal construction parts, in particular for hardening, by induction, of the type comprising:
at least one inductor (101, 201, 301, 401, 501), each inductor constituted by a tubular conductor having an internal duct, the conductor being shaped so as to extend along a pre-established path, the conductor having two terminal connectors and preferably forming at least one turn;
at least one unit for generating and supplying an electrical power signal (4, 5) to power the said at least one inductor, which unit comprises two output conductors (103, 203) and is configured to generate a power electrical current signal having a pre-established frequency and a pre-established amplitude and to feed the said signal through the two output conductors (103, 203) to respectively a corresponding terminal connector of said inductor, said output conductors also being provided with internal channels (403) for a cooling fluid;
at least one circuit for supplying a cooling fluid which has a delivery and a return, which are connected or can be connected in a sealed manner with the internal channels (403) of the said output conductors (103, 203) and with the internal duct of the conductors forming the said inductor (101, 201, 301, 401, 501),
the said terminal connectors of the said at least one inductor being configured to generate an electrical connection with the said output conductors (103, 203) and to also generate a sealed connection of the internal duct of the inductor conductors and with the internal channels (403) to said output conductors,
**characterized in that**
the device has in combination at least two inductors,
the two output conductors (103, 203) are provided in combination with a branch conductor (303) and the two inductors are connected with their respective terminal connectors to one of the two output conductors (103, 203) and to the branch conductor, respectively,
the device comprises a switch (100),
the output conductors (103, 203) can be connected alternatively to the branch conductor (303) by means of the switch (100),
the said branch conductor (303) is further provided with channels for the circulation of the cooling fluid which are connected or connectable to the said supply circuit of the said cooling fluid (5), and
at least part of the said switch (100) is provided with cooling channels connected or connectable to the said supply circuit of the said cooling fluid.

2. Device according to claim 1, wherein the switch (100) has contact poles (P1, P2, P3, P4) which are each respectively in electrical contact with the branch conductor (303) and with the output conductors (103, 203), the switch having an electrically conductive switching slider (10) for the alternative contact of the said poles (P1, P2, P3,P4) between them and which switching slider (10) can be displaced along a displacement guide (121), from a switching position in which the power signal is supplied to one of a corresponding inductor (101, 201, 301, 401, 501) electrically connected thereto to a switching position in which the power signal is not supplied to the corresponding inductor and vice versa.

3. Device according to claims 1 or 2, wherein means are provided for actuating the movement of the electrically conductive switching slider (10) between the said two switching positions which means consist of a hydraulic flow, the slide guide being constituted by a duct (121) for a driving fluid and the flow direction of said fluid being variable corresponding to the switching condition in which the slider (10) must be moved.

4. Device according to claim 3, wherein the operating fluid of the switching slider (10) is constituted by a cooling fluid, and in particular, by the same cooling fluid also supplied to the output conductors (103, 203) and/or to the branch conductor (303) and also to the inductors (101, 201, 301, 401, 501), supply ducts of the said fluid being provided to the duct (121) which constitutes the movement guide of the switching slider (10) and which in combination with one or more reversal valves allow the fluid to be fed to said guide duct (121) alternatively according to two different directions.

5. Device according to one or more of the preceding claims, wherein the duct (121) which constitutes the guide for moving the switching slider (10) between the two switching positions is a straight duct at the ends of which an access opening is provided to the said duct, the said openings being alternatively connected to a delivery and a return of the cooling fluid supply circuit by means of a system of valves and which alternatively generate the passage of the fluid according to two opposite directions, while the poles ( P1, P2, P3, P4) are positioned in pairs on diametrically opposite sides of said guide duct (121), the poles (P1, P2, P3, P4) of each pair being aligned along the same radial plane with respect to the axis of the said guide duct (121) and spaced from each other to a lesser extent than the width of the said guide duct (121) and the corresponding maximum dimension of the switching slider (10), so the flow of fluid supplied to the guide duct (121) in one direction brings the switching slider (10) into contact with the poles (P1, P2; P3, P4) of a pair and the flow of fluid supplied to the guide duct (121) in the opposite direction drags the switching slider (10) in the direction of moving away from said pair of poles, a limit switch clash being provided for moving away the slider or a further pair of poles to be electrically connected to each other.

6. Device according to one or more of the preceding claims, wherein the duct (121) which constitutes the guide of the switching slider (10) has a passage section for the operating fluid, i.e. the cooling fluid, which is larger in a pre-established dimension of the corresponding section of the said slider (10), the said dimension being defined as a function of the optimization of the ratio between the thrust force and therefore the holding force of the switching slider (10) in the said switching positions and the quantity of the flow of fluid that passes through the duct (121) which constitutes the displacement guide of the said slider (10) and which is necessary for the cooling of the said slider (10) and the poles (P1, P2, P3, P4) and/or all the switch (100).

7. Device according to one or more of the preceding claims, wherein the switching slider (10) is constituted by a sphere and the guide duct (121) is cylindrical in shape, while the poles (P1, P2, P3, P4) are made up of cylinders of conductive material which are electrically connected to one of the branch and/or output conductors (103, 203, 303) and which are housed in a sealed manner using gaskets (16) in corresponding cylindrical seats (123) which intersect at pairs and partially for a peripheral band the said duct (121) which forms the guide of the switching slider (10) form contact windows between the said slider (10) and the corresponding pole (P1, P2, P3, P4), being the said cylindrical seats (123) and said poles (P1, P2, P3, P4) of a pair positioned on diametrically opposite sides of said guide duct (121) and radially aligned, i.e. coinciding with each other, so in a condition of switching, the said switching slider (10) comes into contact simultaneously with the part of the perimeter surface of the poles (P1, P2, P3, P4) of the said pair which protrude inside the diameter of the guide duct (121) in correspondence of the said windows (122).

8. Device according to one or more of the preceding claims, wherein the combination of two inductors (101, 201) is provided, which inductors present electrical characteristics such as inductance, resistance and/or capacitance substantially identical within pre-established tolerances, and wherein each of the said inductors is powered by branch conductor (303) and respectively one of the output conductors (103, 203), and wherein the said two output conductors (103, 203) are made at least for part of their extension in the shape of an "L" and are positioned with the "L" shape in a mirror-image position reversed to each other and with two branches parallel to each other and the other two branches longitudinally aligned each other, the said output conductors (103, 203) being separated from each other by an electrical insulator, such as for example a mutual spacing gap between them or an intermediate element (9) of insulating material, while in a position parallel to the said branches longitudinally aligned of the two output conductors (103, 203) in the shape of an "L" is placed side by side, with the interposition of a spacing gap or an insulating element (9), a branch conductor (303), being the said two inductors (101, 201) connected or connectable respectively to one of the two "L" shaped output conductors (103, 203) and to one end of the said, common, branch conductor (303), while the switch (100) includes two pairs of poles (P1, P2; P3, P4) intended to be electrically connected to each other by the switching slider (10) and alternatively for each of the said two pairs and the poles of a pair (P1, P2) being positioned and electrically connected respectively in the corner area of one of the "L" shaped output conductors (103) and to the branch conductor (303) and the poles of the other pair (P3, P4) being positioned and electrically connected respectively in the corner area of the other of the output conductors output (203) in the shape of an "L" and to the said common branch conductor (303), while the poles of the two pairs have an identical mutual distance which is smaller than the corresponding dimension of the guide duct (121) of the switching slider (10) for a pre-established measurement and which is smaller than the corresponding size of the switching slider (10) itself.

9. Device according to one or more of the preceding claims 1 to 7, wherein three or more inductors are provided in combination which present electrical characteristics such as substantially identical inductance, resistance and/or capacitance within pre-established tolerances and wherein a plurality of adjacent branch conductors (303) is interposed between the said two output conductors (103, 203), the said branch conductors of the said plurality being arranged in series with each other between the said two output conductors and being spaced from each other by an electrical insulation gap or by means of an intermediate electrical insulation insert (9), being a first inductor (101) connected respectively to a first of the output conductors (103) and to a first branch conductor (303) and being a last inductor (501) connected respectively to a last branch conductor (303) and to the second of the output conductors (203) and the branch conductors (303) being provided between said first and said last branch conductors (303) connected in series with each other by an inductor (201, 301, 401) respectively, while between said first output conductor (103) and said first branch conductor (303), as well as between said last branch conductor (303) and said second output conductor (203) and between each pair of adjacent branch conductors (303) connected to each other in series by an inductor (201, 301, 401) a switching slider is provided for short-circuiting said conductors in parallel to the corresponding inductor (101, 201, 301, 401, 501) the said switch being constituted by a pair of poles (P1, P2) respectively electrically connected to the corresponding output conductor (103, 203) and to the corresponding branch conductor (303) and between the two branch conductors (303) to which an inductor (101, 201, 301, 401, 501) is connected, which poles can be connected or disconnected from each other by means of a switching slider (10) which it can be maintained between a position of simultaneous contact of the corresponding two poles in a position of separation from said two poles.

10. Device according to claim 9, wherein the said switch comprises a guide duct (121) which passes between the said two poles (P1, P2) and which is intersected for part of the dimension parallel to the distance between them by the said two poles (P1, P2), the distance of said poles (P1, P2) being smaller than the corresponding dimension of the switching slider (10) and a limit switch being provided in the switching position of the switching slider (10) in which said slider is detached from said two poles, the movement of the switching slider (10) being actuated by a flow of fluid, in particular a flow of the cooling fluid and the direction of said flow being reversible.

11. Device according to claims 9 or 10, wherein said poles can have a cylindrical construction, the guide duct can be cylindrical, and the slider can be spherical.

## Patentansprüche

1. Vorrichtung zur Wärmebehandlung von Metallbauteilen, insbesondere zum Härten durch Induktion, des Typs umfassend:
wenigstens einen Induktor (101, 201, 301, 401, 501), wobei jeder Induktor aus einem röhrenförmigen Leiter mit einem inneren Kanal besteht, wobei der Leiter so geformt ist, dass er sich entlang einer vorgegebenen Strecke erstreckt, wobei der Leiter zwei Endanschlüsse aufweist und vorzugsweise wenigstens eine Windung bildet;
wenigstens eine Einheit zum Erzeugen und Speisen eines elektrischen Leistungssignals (4, 5) zur Leistungsversorgung des wenigstens einen Induktors, wobei die Einheit zwei Ausgangsleiter (103, 203) umfasst und dazu ausgebildet ist, ein elektrisches Leistungsstromsignal mit einer vorbestimmten Frequenz und einer vorbestimmten Amplitude zu erzeugen und das Signal über die beiden Ausgangsleiter (103, 203) jeweils an einen entsprechenden Endanschluss des Induktors zu übertragen, wobei die Ausgangsleiter auch mit Innenkanälen (403) für ein Kühlfluid versehen sind;
wenigstens einen Kreislauf zum Zuführen eines Kühlfluids, der einen Zulauf und einen Rücklauf aufweist, die mit den Innenkanälen (403) der Ausgangsleiter (103, 203) und mit dem Innenkanal der den Induktor (101, 201, 301, 401, 501) bildenden Leiter dichtend verbunden oder verbindbar sind,
wobei die Endanschlüsse des wenigstens einen Induktors dazu ausgelegt sind, eine elektrische Verbindung mit den Ausgangsleitern (103, 203) herzustellen und außerdem eine dichte Verbindung des Innenkanals der Induktionsleiter und mit den Innenkanälen (403) zu den Ausgangsleitern herzustellen,
**dadurch gekennzeichnet, dass**
die Vorrichtung mindestens zwei Induktoren in Kombination aufweist,
die beiden Ausgangsleiter (103, 203) in Kombination mit einem Abzweigleiter (303) vorgesehen sind und die beiden Induktoren mit ihren entsprechenden Endanschlüssen mit einem der beiden Ausgangsleiter (103, 203) bzw. mit dem Abzweigleiter jeweils verbunden sind,
wobei die Vorrichtung einen Schalter (100) umfasst,
wobei die Ausgangsleiter (103, 203) wechselweise über den Schalter (100) mit dem Abzweigleiter (303) verbunden werden können,
wobei der Abzweigleiter (303) ferner mit Kanälen für die Zirkulation des Kühlfluids versehen ist, die mit dem Versorgungskreislauf des Kühlfluids (5) verbunden oder verbindbar sind, und
wobei zumindest ein Teil des Schalters (100) mit Kühlkanälen versehen ist, die mit dem Versorgungskreislauf des Kühlfluids verbunden oder verbindbar sind.

2. Vorrichtung nach Anspruch 1, wobei der Schalter (100) Kontaktpole (P1, P2, P3, P4) aufweist, die jeweils in elektrischem Kontakt mit dem Abzweigleiter (303) und mit den Ausgangsleitern (103, 203) stehen, wobei der Schalter einen elektrisch leitenden Schaltschieber (10) zur wechselweisen Kontaktierung der Pole (P1, P2, P3, P4) untereinander aufweist, und welcher Schaltschieber (10) entlang einer Verschiebeführung (121) aus einer Schaltposition, in der das Leistungssignal an einen der elektrisch damit verbundenen Induktoren (101, 201, 301, 401, 501) gespeist wird, in eine Schaltposition, in der das Leistungssignal nicht an den entsprechenden Induktor gespeist wird, und vice versa, verschiebbar ist.

3. Vorrichtung nach Anspruch 1 oder 2, wobei Mittel zum Antreiben der Bewegung des elektrisch leitenden Schaltschiebers (10) zwischen den beiden Schaltpositionen vorgesehen sind, wobei diese Mittel aus einem hydraulischen Strom bestehen, wobei die Verschiebeführung aus einer Leitung (121) für ein Antriebsfluid besteht und die Stromrichtung des Fluids entsprechend dem Schaltzustand, in den der Schieber (10) bewegt werden muss, veränderbar ist.

4. Vorrichtung nach Anspruch 3, wobei das Arbeitsfluid des Schaltschiebers (10) aus einem Kühlfluid besteht, insbesondere aus dem gleichen Kühlfluid, das auch den Ausgangsleitern (103, 203) und/oder dem Abzweigleiter (303) sowie den Induktoren (101, 201, 301, 401, 501) zugeführt wird, wobei Zuführungsleitungen für das zur Leitung (121) zugeführte Fluid vorgesehen sind, die die Bewegungsführung des Schaltschiebers (10) bilden und die in Kombination mit einem oder mehreren Umkehrventilen die wechselweise Zuführung des Fluids zu der Führungsleitung (121) in zwei verschiedenen Richtungen ermöglichen.

5. Vorrichtung gemäß einem oder mehreren der vorstehenden Ansprüche, wobei die Leitung (121), die die Führung für die Bewegung des Schiebeschiebers (10) zwischen den beiden Schaltpositionen bildet, eine gerade Leitung ist, an deren Enden eine Zugangsöffnung zu der besagten Leitung vorgesehen ist, wobei die Öffnungen wechselweise über ein Ventilsystem mit einem Zulauf und einem Rücklauf des Kühlfluidversorgungskreislaufs verbunden sind und wechselweise den Durchgang des Fluids in zwei entgegengesetzte Richtungen bewirken, während die Pole (P1, P2, P3, P4) paarweise auf diametral gegenüberliegenden Seiten der Führungsleitung (121) angeordnet sind, wobei die Pole (P1, P2, P3, P4) jedes Paares in Bezug auf die Achse der Führungsleitung (121) entlang derselben radialen Ebene ausgerichtet sind und voneinander um ein Maß beabstandet sind, das geringer ist als die Breite der Führungsleitung (121) und die entsprechende maximale Abmessung des Schaltschiebers (10), sodass der der Führungsleitung (121) in einer Richtung zugeführte Fluidstrom den Schaltschieber (10) mit den Polen (P1, P2; P3, P4) eines Paares in Kontakt bringt und der in entgegengesetzter Richtung der Führungsleitung (121) zugeführte Fluidstrom den Schaltschieber (10) in eine Richtung weg von dem Polpaar zieht, wobei ein Endanschlagschalter zum Wegbewegen des Schiebers oder eines weiteren Polpaares zur gegenseitigen elektrischen Verbindung vorgesehen ist.

6. Vorrichtung nach einem oder mehreren der vorstehenden Ansprüche, wobei die Leitung (121), die die Führung des Schaltschiebers (10) bildet, einen Durchgangsquerschnitt für das Arbeitsfluid, d. h. das Kühlfluid, aufweist, der um ein vorbestimmtes Maß größer ist als der entsprechende Querschnitt des Schiebers (10), wobei das besagte Maß als Funktion der Optimierung des Verhältnisses zwischen der Schubkraft und damit der Haltekraft des Schaltschiebers (10) in den besagten Schaltpositionen und der Menge des durch die Leitung (121) fließenden Fluidstroms definiert ist, die die Verschiebeführung des besagten Schiebers (10) bildet und die für die Kühlung des besagten Schiebers (10) und der Pole (P1, P2, P3, P4) und/oder des gesamten Schalters (100) erforderlich ist.

7. Vorrichtung nach einem oder mehreren der vorstehenden Ansprüche, wobei der Schaltschieber (10) aus einer Kugel besteht und die Führungsleitung (121) eine zylindrische Form aufweist, während die Pole (P1, P2, P3, P4) aus Zylindern aus leitfähigem Material bestehen, die mit einem der Abzweig- und/oder Ausgangsleiter (103, 203, 303) elektrisch verbunden sind und die unter Verwendung von Dichtungen (16) in entsprechenden zylindrischen Sitzen (123) dichtend aufgenommen sind, welche paarweise und teilweise über ein Umfangsband die die Führung des Schaltschiebers (10) bildende Leitung (121) schneiden und dabei Kontaktfenster zwischen dem Schieber (10) und dem entsprechenden Pol (P1, P2, P3, P4) bilden, wobei die zylindrischen Sitze (123) und die Pole (P1, P2, P3, P4) eines Paares auf diametral gegenüberliegenden Seiten der Führungsleitung (121) positioniert und radial ausgerichtet sind, d. h. sie stimmen so miteinander überein, dass der Schaltschieber (10) in einem Schaltzustand mit dem Abschnitt der Umfangsoberfläche der innerhalb des Durchmessers der Führungsleitung (121) hervorstehenden Pole (P1, P2, P3, P4) des Paares im Bereich der Fenster (122) gleichzeitig in Kontakt kommt.

8. Vorrichtung nach einem oder mehreren der vorstehenden Ansprüche, wobei eine Kombination aus zwei Induktoren (101, 201) vorgesehen ist, welche Induktoren elektrische Eigenschaften wie Induktivität, Widerstand und/oder Kapazität aufweisen, die innerhalb vorab festgelegter Toleranzen im Wesentlichen identisch sind, und wobei jeder der Induktoren über einen Abzweigleiter (303) und jeweils einen der Ausgangsleiter (103, 203) versorgt wird, und wobei die beiden Ausgangsleiter (103, 203) zumindest für einen Teil ihrer Länge in Form eines "L" ausgebildet sind und mit der "L"-Form in einer spiegelbildlichen Position zueinander umgekehrt und mit zwei zueinander parallelen Abzweigungen und den beiden anderen Abzweigungen in Längsrichtung zueinander ausgerichtet angeordnet sind, wobei die Ausgangsleiter (103, 203) durch einen elektrischen Isolator voneinander getrennt sind, beispielsweise durch einen dazwischenliegenden Distanzspalt oder durch ein Zwischenelement (9) aus isolierendem Material, während in einer NebeneinanderAnordnung parallel zu den besagten, in Längsrichtung ausgerichteten Abzweigungen der beiden L-förmigen Ausgangsleiter (103, 203), ein Abzweigleiter (303) unter Zwischenschaltung eines Distanzspalts oder eines Isolierelements (9) angeordnet ist, wobei die beiden Induktoren (101, 201) jeweils mit einem der beiden L-förmigen Ausgangsleiter (103, 203) und mit einem Ende des gemeinsamen Abzweigleiters (303) verbunden oder verbindbar sind, während der Schalter (100) zwei Paare von Polen (P1, P2; P3, P4) umfasst, die dazu bestimmt sind, durch den Schaltschieber (10) elektrisch miteinander verbunden zu werden, und wechselweise für jedes der beiden Paare, wobei die Pole eines Paares (P1, P2) jeweils im Eckbereich eines der L-förmigen Ausgangsleiter (103) angeordnet und elektrisch mit dem Abzweigleiter (303) verbunden sind und die Pole des anderen Paares (P3, P4) jeweils im Eckbereich des anderen der L-förmigen Ausgangsleiter (203) angeordnet und elektrisch mit dem gemeinsamen Abzweigleiter (303) verbunden sind, während die Pole der beiden Paare einen identischen gegenseitigen Abstand aufweisen, der um ein vorgegebenes Maß kleiner als die entsprechende Abmessung der Führungsleitung (121) des Schaltschiebers (10) und kleiner als die entsprechende Größe des Schaltschiebers (10) selbst ist.

9. Vorrichtung nach einem oder mehreren der vorstehenden Ansprüche 1 bis 7, wobei drei oder mehr Induktoren in Kombination vorgesehen sind, die elektrische Eigenschaften wie im Wesentlichen identische Induktivität, identischen Widerstand und/oder identische Kapazität innerhalb vorgegebener Toleranzen aufweisen, und wobei eine Vielzahl benachbarter Abzweigleiter (303) zwischen den beiden Ausgangsleitern (103, 203) zwischengeschaltet ist, wobei die Abzweigleiter der Vielzahl zwischen den beiden Ausgangsleitern in Reihe zueinander angeordnet sind und durch einen elektrischen Isolationsspalt oder mittels eines elektrischen Zwischenisolationseinsatzes (9) voneinander beabstandet sind, wobei ein erster Induktor (101) jeweils mit einem ersten der Ausgangsleiter (103) und einem ersten Abzweigleiter (303) verbunden ist und wobei ein letzter Induktor (501) jeweils mit einem letzten Abzweigleiter (303) und mit dem zweiten der Ausgangsleiter (203) verbunden ist, und wobei die Abzweigleiter (303) zwischen dem ersten und dem letzten Abzweigleiter (303) vorgesehen sind, die jeweils durch einen Induktor (201, 301, 401) in Reihe miteinander verbunden sind, während zwischen dem ersten Ausgangsleiter (103) und dem ersten Abzweigleiter (303) sowie zwischen dem letzten Abzweigleiter (303) und dem zweiten Ausgangsleiter (203) und zwischen jedem Paar von miteinander in Reihe geschalteten benachbarten Abzweigleitern (303) durch einen Induktor (201, 301, 401) ein Schaltschieber vorgesehen ist, um die Leiter parallel zum entsprechenden Induktor (101, 201, 301, 401, 501) kurzzuschließen, wobei der Schalter aus einem Paar von Polen (P1, P2) besteht, die jeweils elektrisch mit dem entsprechenden Ausgangsleiter (103, 203) und dem entsprechenden Abzweigleiter (303) verbunden sind, und zwischen den beiden Abzweigleitern (303), an denen ein Induktor (101, 201, 301, 401, 501) angeschlossen ist, welche Pole miteinander verbunden oder voneinander getrennt werden können mittels eines Schaltschiebers (10), der zwischen einer Position des gleichzeitigen Kontakts der beiden entsprechenden Pole in einer Trennposition von den beiden Polen gehalten werden kann.

10. Vorrichtung nach Anspruch 9, wobei der Schalter eine Führungsleitung (121) umfasst, die zwischen den beiden Polen (P1, P2) verläuft und die über einen Teil der parallel zu deren Abstand verlaufenden Abmessung von den beiden Polen (P1, P2) geschnitten wird, wobei der Abstand der Pole (P1, P2) kleiner ist als die entsprechende Abmessung des Schaltschiebers (10) und in der Schaltposition des Schaltschiebers (10), in der der Schieber von den beiden Polen gelöst ist, ein Endanschlag vorgesehen ist, wobei die Bewegung des Schaltschiebers (10) durch einen Fluidstrom, insbesondere einen Kühlfluidstrom, angetrieben wird und die Richtung des Fluidstroms umkehrbar ist.

11. Vorrichtung nach Anspruch 9 oder 10, wobei die Pole eine zylindrische Konstruktion aufweisen können, die Führungsleitung zylindrisch sein kann und der Schieber kugelförmig sein kann.

## Revendications

1. Dispositif pour le traitement thermique de pièces de construction métalliques, notamment pour la trempe par induction, du type comprenant:
au moins un inducteur (101, 201, 301, 401, 501), chaque inducteur étant constitué d'un conducteur tubulaire ayant un conduit interne, le conducteur étant de forme telle qu'il s'étend le long d'un parcours prédéfini, le conducteur ayant deux connecteurs terminaux et formant de préférence au moins une spire;
au moins une unité de génération et de fourniture d'un signal de puissance électrique (4, 5) pour alimenter ledit au moins un inducteur, laquelle unité comprend deux conducteurs de sortie (103, 203) et est configurée pour générer un signal de courant électrique de puissance ayant une fréquence prédéfinie et une amplitude prédéfinie et pour acheminer ledit signal à travers les deux conducteurs de sortie (103, 203) vers, respectivement, un connecteur terminal correspondant dudit inducteur, lesdits conducteurs de sortie étant également munis de canaux internes (403) pour un fluide de refroidissement;
au moins un circuit de fourniture d'un fluide de refroidissement ayant un refoulement et un retour qui sont reliés ou pouvant être reliés de manière étanche aux canaux internes (403) desdits conducteurs de sortie (103, 203) et au conduit interne des conducteurs formant ledit inducteur (101, 201, 301, 401, 501),
lesdits connecteurs terminaux dudit au moins un inducteur étant configurés pour générer une connexion électrique avec lesdits conducteurs de sortie (103, 203) et pour générer également une connexion étanche du conduit interne des conducteurs de l'inducteur et avec les canaux internes (403) auxdits conducteurs de sortie,
**caractérisé en ce que**
le dispositif a au moins deux inducteurs en combinaison,
les deux conducteurs de sortie (103, 203) sont fournis en association avec un conducteur de dérivation (303) et les deux inducteurs sont reliés, respectivement, avec leurs connecteurs terminaux respectifs, à l'un des deux conducteurs de sortie (103, 203) et au conducteur de dérivation,
le dispositif comprend un commutateur (100),
les conducteurs de sortie (103, 203) peuvent être reliés alternativement au conducteur de dérivation (303) au moyen du commutateur (100),
ledit conducteur de dérivation (303) est en outre muni de canaux de circulation du fluide de refroidissement reliés ou pouvant être reliés audit circuit de fourniture dudit fluide de refroidissement (5), et
au moins une partie dudit commutateur (100) est munie de canaux de refroidissement reliés ou pouvant être reliés audit circuit de fourniture dudit fluide de refroidissement.

2. Dispositif selon la revendication 1, dans lequel le commutateur (100) a des pôles de contact (P1, P2, P3, P4) étant chacun respectivement en contact électrique avec un conducteur de dérivation (303) et avec des conducteurs de sortie (103, 203), le commutateur ayant un curseur de commutation électriquement conducteur (10) pour le contact alternatif desdits pôles (P1, P2, P3,P4) entre eux et lequel curseur de commutation (10) peut être déplacé le long d'un guide de déplacement (121), depuis une position de commutation dans laquelle le signal de puissance est fourni à l'un d'un inducteur correspondant (101, 201, 301, 401, 501) relié électriquement au même vers une position de commutation dans laquelle le signal de puissance n'est pas transmis à l'inducteur correspondant et vice-versa.

3. Dispositif selon les revendications 1 ou 2, dans lequel des moyens sont prévus pour actionner le mouvement du curseur de commutation électriquement conducteur (10) entre lesdites deux positions de commutation, lesquels moyens consistent en un flux hydraulique, le guide de coulissement étant constitué d'un conduit (121) pour un fluide d'entraînement et la direction du flux dudit fluide étant variable en fonction de la condition de commutation dans laquelle le curseur (10) doit être déplacé.

4. Dispositif selon la revendication 3, dans lequel le fluide d'actionnement du curseur de commutation (10) est constitué d'un fluide de refroidissement, et notamment par le même fluide de refroidissement également fourni aux conducteurs de sortie (103, 203) et/ou au conducteur de dérivation (303) et également aux inducteurs (101, 201, 301, 401, 501), des conduits d'alimentation dudit fluide étant fournis au conduit (121) constituant le guide de mouvement du curseur de commutation (10) et qui, en combinaison avec une ou plusieurs vannes d'inversion, permet au fluide d'être fourni audit conduit guide (121) alternativement selon deux directions différentes.

5. Dispositif selon l'une ou plusieurs des revendications précédentes, dans lequel le conduit (121) constituant le guide de mouvement du curseur de commutation (10) entre les deux positions de commutation est un conduit droit aux extrémités duquel est prévue une ouverture d'accès audit conduit, lesdites ouvertures étant reliées alternativement à un refoulement et un retour du circuit de fourniture de fluide de refroidissement au moyen d'un système de valves et générant alternativement le passage du fluide selon les deux directions opposées, lorsque que les pôles (P1, P2, P3, P4) sont positionnés par paires sur des côtés diamétralement opposés dudit conduit guide (121), les pôles (P1, P2, P3, P4) de chaque paire étant alignés le long du même plan radial par rapport à l'axe dudit conduit guide (121) et espacés entre eux d'une distance inférieure à la largeur dudit conduit guide (121) et à la dimension maximale correspondante du curseur de commutation (10), de manière que le flux de fluide fourni au conduit guide (121) dans une direction amène le curseur de commutation (10) en contact avec les pôles (P1, P2; P3, P4) d'une paire et que le flux de fluide fourni au conduit guide (121) dans la direction opposée entraîne le curseur de commutation (10) dans la direction d'éloignement de ladite paire de pôles, étant prévue une butée de fin de course d'éloignement du curseur ou étant prévue une autre paire de pôles à relier électriquement entre eux.

6. Dispositif selon l'une ou plusieurs des revendications précédentes, dans lequel le conduit (121) constituant le guide du curseur de commutation (10) a une section de passage pour le fluide d'actionnement, c.à.d. le fluide de refroidissement, qui est plus grande dans une dimension prédéfinie de la section correspondante dudit curseur (10), ladite dimension étant définie en fonction de l'optimisation du rapport entre la force de poussée, et donc la force de maintien du curseur de commutation (10) dans lesdites positions de commutation, et la quantité du flux de fluide qui traverse le conduit (121) qui constitue le guide de déplacement dudit curseur (10) et qui est nécessaire au refroidissement dudit curseur (10) et des pôles (P1, P2, P3, P4) et/ou de tout le commutateur (100).

7. Dispositif selon l'une ou plusieurs des revendications précédentes, dans lequel le curseur de commutation (10) est constitué d'une sphère et le conduit guide (121) est de forme cylindrique, tandis que les pôles (P1, P2, P3, P4) sont constitués de cylindres en matériau conducteur qui sont reliés électriquement à un des conducteurs (103, 203, 303) de dérivation et/ou de sortie e qui sont logés de manière étanche au moyen de joints (16) dans les sièges cylindriques (123) correspondants croisant en paire et partiellement, le long d'une bande périphérique, ledit conduit (121) formant le guide du curseur de commutation (10), formant des fenêtres de contact entre ledit curseur (10) et le pôle (P1, P2, P3, P4) correspondant, lesdits sièges cylindriques (123) et lesdits pôles (P1, P2, P3, P4) d'une paire étant positionnés sur des côtés diamétralement opposés dudit conduit guide (121) et alignés radialement, c.à.d. coïncidant entre eux, de manière telle que, dans une condition de commutation, ledit curseur de commutation (10) entre simultanément en contact avec une partie de la surface périphérique des pôles (P1, P2, P3, P4) de ladite paire faisant saillie à l'intérieur du diamètre du conduit guide (121) en correspondance desdites fenêtres (122).

8. Dispositif selon l'une ou plusieurs des revendications précédentes, dans lequel est prévue la combinaison de deux inducteurs (101, 201), lesquels inducteurs ont des caractéristiques électriques telles que l'inductance, la résistance et/ou la capacité sensiblement identiques dans des tolérances prédéfinies, et dans lequel chacun desdits inducteurs est alimenté par un conducteur de dérivation (303) et respectivement par l'un des conducteurs de sortie (103, 203), et dans lequel lesdits deux conducteurs de sortie (103, 203) sont réalisés le long d'au moins une partie de leur extension en forme de « L » et sont positionnés avec la forme en « L » dans une positon miroir inversée l'un par rapport à l'autre et avec deux branches parallèles entre elles et les deux autres branches alignées longitudinalement entre elles, lesdits conducteurs de sortie (103, 203) étant séparés entre eux par un isolant électrique, tel que par exemple un espace de séparation mutuel entre eux ou un élément intermédiaire (9) en matériau isolant, tandis que dans une position parallèle auxdites branches longitudinalement alignées des deux conducteurs de sortie (103, 203) en forme de « L » est disposé côte à côte, avec l'interposition d'un espace de séparation ou d'un élément isolant (9), un conducteur de dérivation (303), lesdits deux inducteurs (101, 201) étant reliés ou pouvant être respectivement reliés à l'un des deux conducteurs de sortie (103, 203) en forme de « L » et à une extrémité dudit conducteur de dérivation (303) commun, tandis que le commutateur (100) comprend deux paires de pôles (P1, P2; P3, P4) destinées à être reliées électriquement entre elles au moyen du curseur de commutation (10) et alternativement pour chacune desdites deux paires et les pôles d'une paire (P1, P2) étant positionnés et reliés électriquement respectivement dans la zone d'angle de l'un des conducteurs de sortie (103) en forme de « L » et au conducteur de dérivation (303) et les pôles de l'autre paire (P3, P4) étant positionnés et reliés électriquement respectivement dans la zone d'angle des autres conducteurs de sortie (203) en forme de « L » et audit conducteur de dérivation (303) commun, tandis que les pôles des deux paires ont une distance mutuelle identique qui est inférieure à la dimension correspondante du conduit guide (121) du curseur de commutation (10) le long d'une mesure prédéfinie et qui est inférieure à la dimension correspondante du curseur de commutation (10) lui-même.

9. Dispositif selon l'une ou plusieurs des revendications précédentes 1 à 7, dans lequel sont prévus en combinaison trois ou plusieurs inducteurs qui présentent des caractéristiques électriques telles que une inductance, une résistance et/ou une capacité sensiblement identiques dans des tolérances prédéfinies et dans lequel une pluralité de conducteurs de dérivation adjacents (303) est interposée entre lesdits deux conducteurs de sortie (103, 203), lesdits conducteurs de dérivation de ladite pluralité étant disposés en série entre eux entre lesdits deux conducteurs de sortie et étant espacés entre eux par un espace d'espacement électrique ou au moyen d'un insert d'isolation électrique intermédiaire (9), un premier inducteur (101) étant relié respectivement au premier des conducteurs de sortie (103) et à un premier conducteur de dérivation (303) et un dernier inducteur (501) étant relié respectivement à un dernier conducteur de dérivation (303) et au second conducteur de sortie (203) et les conducteurs de dérivation (303) étant prévus entre ledit premier et ledit dernier conducteur de dérivation (303) reliés respectivement en série entre eux par un inducteur (201, 301, 401), tandis qu'entre ledit premier conducteur de sortie (103) et ledit premier conducteur de dérivation (303), ainsi que entre ledit dernier conducteur de dérivation (303) et ledit second conducteur de sortie (203) et entre chaque paire de conducteurs de dérivation adjacents (303) reliés entre eux en série par un inducteur (201, 301, 401), un curseur de commutation est prévu pour court-circuiter lesdits conducteurs en parallèle à l'inducteur (101, 201, 301, 401, 501) correspondant, ledit commutateur étant constitué d'une paire de pôles (P1, P2) respectivement reliés électriquement au conducteur de sortie (103, 203) correspondant et au conducteur de dérivation (303) correspondant et entre les deux conducteurs de dérivation (303), auquel un inducteur (101, 201, 301, 401, 501) est relié, lesdits pôles peuvent être connectés ou déconnectés l'un de l'autre au moyen d'un curseur de commutation (10) qui peut être maintenu entre une position de contact simultanés des deux pôles correspondants dans une position de séparation de ces deux pôles.

10. Dispositif selon la revendication 9, dans lequel ledit commutateur comprend un conduit guide (121) qui passe entre lesdits deux pôles (P1, P2) et qui est intersecté le long d'une partie de la dimension parallèle à la distance entre eux par lesdits deux pôles (P1, P2), la distance desdits deux pôles (P1, P2) étant inférieure à la dimension correspondante du curseur de commutation (10) et un commutateur de fin de course étant prévu dans la position de commutation du curseur de commutation (10) dans laquelle ledit curseur est détaché desdits deux pôles, le mouvement du curseur de commutation (10) étant actionné par un flux de fluide, notamment un flux du fluide de refroidissement et la direction dudit flux étant réversible.

11. Dispositif selon la revendication 9 ou 10, dans lequel lesdits pôles peuvent être construits de manière cylindrique, le conduit guide peut être cylindrique et le curseur peut être sphérique.
